# FASCICULE DE BREVET EUROPEEN

(11) **EP 1 927 485 B1**
(45) Date de publication et mention de la délivrance du brevet: **12.05.2010**
(21) Numéro de dépôt: 07291444.3
(22) Date de dépôt: 03.12.2007
(51) Int. Cl.: B60D 1/00, B60D 1/52, B60D 1/54, B62D 63/06

(54) **Timon d'attelage pour chariot de manutention, un tel chariot et procédé de montage du timon sur ce chariot**
Kupplungszugstange für Transportkarre, eine solche Transportkarre und Verfahren zur Montage der Zugstange auf der Karre
Drawbar for an industrial truck, corresponding truck and method for installing the drawbar on this truck

(30) Priorité: 01.12.2006 FR 0610512
(43) Date de publication de la demande: 04.06.2008
(73) Titulaire: Fimopart, 92120 Montrouge (FR)
(72) Inventeur: Aliaga, Laurent, 14100 Hermival les Vaux (FR)
(74) Mandataire: Bolinches, Michel Jean-Marie

(56) Documents cités:
- EP-A1- 1 506 885
- WO-A-00/46050
- DE-A1- 10 059 256
- FR-A- 2 504 461
- FR-A1- 2 406 533
- FR-A1- 2 453 740
- FR-A1- 2 876 957
- NL-A- 9 302 072

## Description

La présente invention concerne un timon d'attelage pour chariots de manutention, un chariot de manutention pourvu d'un tel timon et un procédé de montage de ce timon sur ce chariot. L'invention s'applique notamment à l'attelage d'une file ou rame de chariots de livraison tractés par un chariot de tête autopropulsé, qui destinée à évoluer dans des locaux industriels ou bien à l'extérieur de ceux-ci, d'un local industriel à un autre.

On connaît par le document FR-A-2 876 957 au nom de la Demanderesse un timon pour chariot de manutention de type à attelage fixe, qui est monté à l'avant d'un chariot tracté et qui coopère avec un crochet d'attelage monté à l'arrière d'un chariot tracteur. Un orifice d'attelage est prévu à une extrémité avant du timon pour immobiliser le crochet dans une position d'attelage pendant le déplacement des chariots attelés, et ce timon comporte en outre une plaque de guidage pour faire glisser le crochet le long du timon et jusqu'à un bord de cet orifice par un effort de traction exercé par le chariot tracteur, via une immobilisation du crochet contre une butée dans une position en attente d'attelage, puis un abaissement du timon pour loger le crochet dans l'orifice d'attelage.

Plus précisément, le timon décrit dans ce document est pourvu d'un axe transversal de pivotement qui est monté solidaire par boulonnage de l'extrémité avant du châssis du chariot. Cet axe de pivotement est constitué de deux tubes coaxiaux espacés à l'intérieur desquels est logée une vis traversant les ailes d'une chape en forme de U renversé qui est soudée au châssis. La vis est pourvue, à son extrémité libre, d'un écrou qui est vissé contre l'une des ailes et, sur sa partie médiane, d'un ressort de torsion qui est mobile axialement entre les deux tubes. Ce ressort est prévu pour rappeler le timon vers une position redressée.

Ce timon est particulièrement avantageux, en ce sens qu'il permet notamment de faciliter l'opération d'attelage d'une file de chariots tout en minimisant l'encombrement en longueur de cette file à l'arrêt.

Cependant, ce timon présente l'inconvénient de ne pas être facilement démontable du fait du boulonnage précité de son axe de pivotement sur le châssis, ce qui pénalise en particulier le traitement de surface de l'ensemble chariot - timon en vue de son entretien du fait de l'impossibilité d'accéder aux zones boulonnées du chariot en liaison avec le timon.

Un but de la présente invention est de proposer un timon d'attelage pour chariots de manutention, le timon comportant un axe transversal de pivotement destiné à être monté pivotant à l'avant d'un chariot tracté et étant adapté pour coopérer avec un crochet d'attelage monté à l'arrière d'un chariot tracteur, le timon étant pourvu d'un moyen de rappel destiné à être relié audit chariot tracté et prévu pour rappeler le timon vers une position redressée, qui permette de remédier à l'inconvénient précité.

A cet effet, un timon selon l'invention est tel que ledit moyen de rappel est relié au timon à l'écart dudit axe, lequel forme un joint mobile avec des moyens de réception dudit axe prévus à l'avant dudit chariot tracté, de telle sorte que le timon soit monté amovible sur lesdits moyens de réception en retirant du timon ledit moyen de rappel puis en délogeant ledit axe desdits moyens de réception.

On notera que le timon de l'invention peut être ainsi aisément et rapidement démonté du chariot et remonté sur ce dernier, ce qui permet notamment d'accéder à la totalité de la surface de l'avant du chariot pour lui appliquer, aussi souvent que nécessaire, un traitement de surface efficace pour son entretien.

On notera également que cette liaison de type joint mobile entre l'axe de pivotement et les moyens de réception désigne de manière connue un assemblage laissant une certaine liberté de mouvement en rotation (i.e. un pivotement avec jeu), par opposition au montage en rotation pure via des pivots ou analogues qui est obtenu dans le document précité FR-A-2 876 957 via le boulonnage de l'axe de pivotement sur le châssis, et que cette liaison à joint mobile facilite les opérations de montage/ démontage du timon sur le chariot.

Selon une autre caractéristique de l'invention, ledit axe de pivotement peut se terminer par deux extrémités latérales recourbées qui sont respectivement adaptées pour bloquer ledit axe dans lesdits moyens de réception. Avantageusement, ces deux extrémités recourbées s'étendent d'un même côté du timon (vers le bas lorsque le timon est globalement horizontal).

Selon une autre caractéristique de l'invention, ledit moyen de rappel peut être monté sur une patte d'accrochage transversale, par exemple via une rainure de positionnement formée sur cette patte et adaptée pour recevoir un crochet dudit moyen de rappel, laquelle patte est reliée audit axe de pivotement en lui étant parallèle et forme une extrémité arrière du timon.

Selon une autre caractéristique de l'invention, ledit moyen de rappel peut comporter un ressort hélicoïdal de traction dont l'axe de symétrie est agencé perpendiculairement audit axe de pivotement.

Avantageusement, ledit timon peut présenter sensiblement une forme de triangle isocèle délimité par deux rebords longitudinaux se rejoignant en une extrémité avant du timon et par une base transversale coudée sensiblement à angle droit en se prolongeant d'une manière rétrécie vers ladite extrémité arrière par deux portions longitudinales parallèles qui sont reliées entre elles par ladite patte d'accrochage, ledit axe de pivotement étant monté sur ces portions, par exemple par soudage, en les chevauchant.

Egalement avantageusement, ledit timon comporte une plaque de guidage qui s'étend entre lesdits rebords du timon en formant un orifice d'attelage avec ladite extrémité avant et qui est destinée à guider par glissement, par un effort de traction exercé par le chariot tracteur, ledit crochet le long du timon en l'amenant jusqu'à un bord dudit orifice d'attelage, en vue d'y loger ledit crochet dans une position d'attelage par désengagement de ladite plaque, à l'instar du timon décrit dans le document précité FR-A-2 876 957.

Un chariot de manutention selon l'invention comporte un châssis duquel sont montés solidaires des moyens de réception de l'axe de pivotement d'un timon d'attelage, et il est pourvu d'un timon tel que défini ci-dessus.

Avantageusement, ce chariot est tel que ledit moyen de rappel est formé d'un ressort hélicoïdal de traction dont l'axe de symétrie est perpendiculaire audit axe de pivotement et qui est monté sur une patte d'accrochage transversale via un crochet avant, laquelle patte est reliée audit axe de pivotement en lui étant parallèle et forme une extrémité arrière du timon, ledit ressort de traction étant relié via un crochet arrière dont il est pourvu à une organe d'accrochage sensiblement vertical faisant saillie sous ledit châssis, tel qu'une tige coudée en « S ».

Encore plus avantageusement, ladite patte d'accrochage du timon est agencée en hauteur par rapport au plan contenant les rebords longitudinaux du timon de telle sorte que, lorsque celui-ci occupe une position redressée pour le montage/ démontage du ressort de traction vis-à-vis du châssis et de cette patte, cette dernière se trouve sensiblement à la même hauteur que la partie dudit organe d'accrochage prévue pour recevoir le crochet arrière de ce ressort.

Selon une autre caractéristique de l'invention, lesdits moyens de réception peuvent avantageusement comporter deux coudes en forme de U solidaires du châssis qui s'étendent chacun dans un plan vertical à l'avant du chariot et longitudinal par rapport à ce dernier en formant chacun deux ailes reliées entre elles par une âme pour recevoir ledit axe en formant ledit joint mobile, de telle sorte que le timon puisse pivoter sensiblement autour d'une ligne imaginaire qui joint les âmes respectives desdits coudes, lesdites extrémités recourbées venant chevaucher ces coudes pour bloquer ledit axe dans lesdits moyens de réception.

Avantageusement, chacun de ces deux coudes comporte une aile avant définissant l'extrémité avant desdits moyens de réception et une aile arrière en retrait de l'aile avant, les deux ailes avant pouvant être reliées entre elles par une traverse horizontale parallèle au bord avant du châssis et les deux ailes arrière se prolongeant respectivement l'une vers l'autre via deux coudes par deux portions transversales parallèles à ladite traverse.

Selon une autre caractéristique de l'invention, ledit châssis peut être avantageusement pourvu d'un ressort auxiliaire, tel qu'un ressort de torsion, qui est agencé autour dudit axe et qui est conçu pour s'opposer à la rotation dudit axe dans le sens du redressement du timon, de sorte à rappeler ce dernier vers le bas pour le maintenir en position abaissée de montage dans lesdits moyens de réception.

Selon un exemple de réalisation de l'invention, ledit ressort auxiliaire est avantageusement monté fixe sur ledit châssis via deux points d'accrochage qui enserrent respectivement lesdites portions transversales et qui sont reliés entre eux, et via deux crochets de retenue qui sont adaptés pour entourer ledit axe et qui sont respectivement reliés auxdits points d'accrochage.

On notera que ce ressort conçu pour entourer l'axe de pivotement dans la position de montage du timon n'a pas à être démonté au préalable lors de l'opération de démontage du timon, contrairement au ressort de traction précité rappelant le timon en position redressée, du fait que le démontage du timon est avantageusement réalisé en délogeant successivement l'axe de pivotement de l'un puis de l'autre coude en U desdits moyens de réception via des déplacements latéraux, comme cela sera expliqué ci-après.

Le procédé de montage selon l'invention d'un timon d'attelage sur un chariot de manutention, le timon comportant un axe transversal de pivotement destiné à être monté pivotant à l'avant du chariot et étant adapté pour coopérer avec un crochet d'attelage, ce timon étant pourvu d'un moyen de rappel destiné à être relié à ce chariot et prévu pour rappeler le timon vers une position redressée, comprend essentiellement les étapes suivantes :
a) on insère successivement une première puis une seconde extrémités latérales recourbées dudit axe entre les deux ailes et l'âme d'un premier puis d'un second coudes en U, respectivement, chaque coude étant formé en un côté de l'avant du chariot dans un plan vertical longitudinal par rapport à ce chariot, pour monter ledit axe dans une position où il est reçu de manière amovible par ces deux coudes en formant un joint mobile, puis
b) on monte ledit moyen de rappel, tel qu'un ressort hélicoïdal de traction dont l'axe de symétrie est agencé perpendiculairement audit axe, d'une part, sur une patte d'accrochage transversale du timon qui est reliée audit axe en lui étant parallèle et qui forme une extrémité arrière du timon, et, d'autre part, sur un organe d'accrochage agencé sous le châssis du chariot.

Selon une autre caractéristique de l'invention, cette étape a) d'insertion de l'axe de pivotement dans lesdits moyens de réception est avantageusement mise en oeuvre dans une position abaissée du timon (i.e. sensiblement à l'horizontale), alors que cette étape b) de montage dudit moyen de rappel sur le timon puis sous le chariot est avantageusement mise en oeuvre en redressant au préalable ce timon (de sorte à lui faire prendre une position sensiblement verticale).

Quant à l'opération de démontage du timon du chariot, elle est avantageusement mise en oeuvre, dans une première étape, en décrochant ledit moyen de rappel de l'organe d'accrochage du châssis puis de la patte d'accrochage du timon, puis, dans une seconde étape, en déplaçant latéralement l'axe de pivotement du timon pour déloger successivement ses extrémités recourbées des coudes en U formés par les moyens de réception.

On notera que ces opérations de montage/ démontage peuvent être réalisées par un opérateur exercé en un temps très court, typiquement de l'ordre de quelques secondes.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue partielle de dessus et en perspective d'un timon selon l'invention en position redressée de dételage qui est monté à l'avant d'un chariot également selon l'invention,
la figure 2 est une vue partielle latérale et en perspective du timon monté sur le chariot de la figure 1 et dans la même position redressée,
la figure 3 est une vue partielle de dessus et en perspective illustrant l'avant du chariot selon les figures 1 et 2 dans une première phase de montage ou une seconde phase de démontage du timon, où celui-ci occupe une position abaissée,
la figure 4 est une vue partielle de dessus et en perspective du chariot de la figure 3 après démontage complet du timon de celui-ci,
la figure 5 est une vue partielle latérale et en perspective du chariot de la figure 4 illustrant plus précisément un élément de celui-ci destiné à coopérer avec le timon,
la figure 6 est une vue partielle de dessus et en perspective du chariot selon l'invention dans une première phase de montage ou une seconde phase de démontage du timon, où celui-ci occupe une position abaissée, et
la figure 7 est une vue partielle de dessus et en perspective illustrant le timon de la figure 6 à l'état monté sur le chariot et redressé.

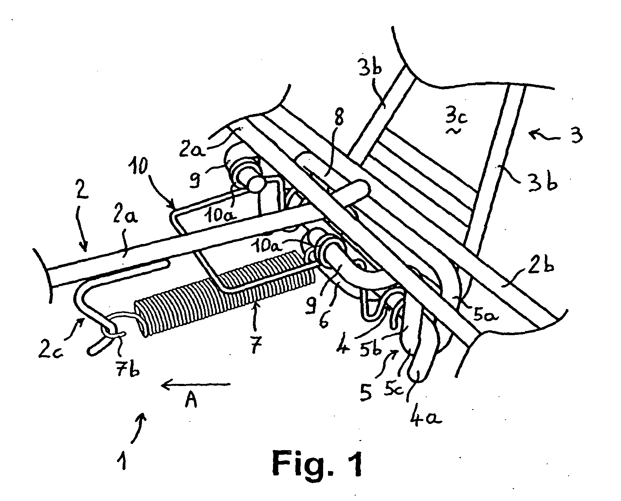

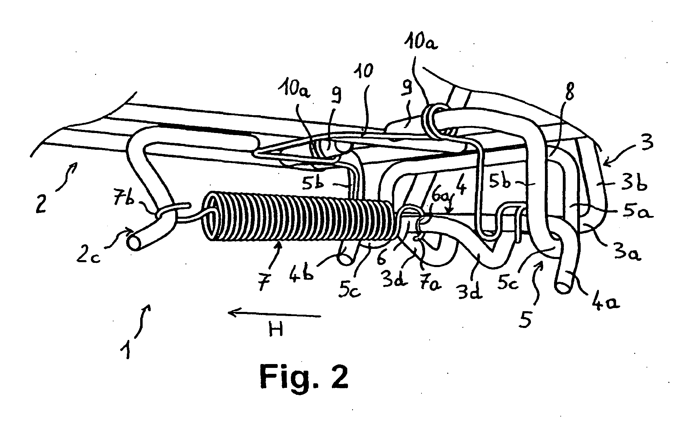

Le chariot de manutention 1, dont la partie avant est illustrée partiellement aux figures 1 et 2, comporte de manière connue un châssis 2 rectangulaire monté par exemple sur deux paires de roues (non illustrées pour des raison de clarté). Ce châssis 2 est constitué de deux cadres inférieur et supérieur qui sont soudés par points l'un sur l'autre et entre lesquels est formé un treillis de fils métalliques 2a, à l'instar du chariot décrit dans le document FR-A-2 876 957 précité.

On notera toutefois qu'un chariot 1 selon l'invention pourrait comporter d'une manière générale un châssis à base de fils, de tubes, de tôles ou encore à base d'une combinaison de plusieurs de ces éléments.

Le chariot 1 comporte, à son extrémité avant, un timon filaire 3 en forme de triangle isocèle délimité par une base transversale 3a et deux rebords longitudinaux 3b se rejoignant à l'extrémité avant du timon 3 en un sommet qui forme un orifice d'attelage pour atteler le chariot 1 à un chariot tracteur analogue, dont l'extrémité arrière se termine par un crochet d'attelage prévu pour venir se loger dans cet orifice. Plus précisément, le timon 3 comporte notamment une plaque 3c de guidage destinée à guider par glissement l'extrémité libre du crochet jusqu'à une butée conçue pour immobiliser le crochet au bord de l'orifice dans une position en attente d'attelage, en vue d'y loger le crochet dans la position d'attelage par abaissement du timon 3, comme décrit dans le document précité FR-A-2 876 957 (l'orifice d'attelage, le crochet et la butée, non représentés ici, peuvent être identiques à ceux illustrés dans ce document FR-A-2 876 957).

Comme illustré aux figures 2 et suivantes, le timon 3 selon l'invention comporte un axe filaire transversal de pivotement 4 qui est séparable du chariot 1 et qui se termine par deux extrémités latérales recourbées 4a et 4b respectivement adaptées pour bloquer l'axe 4 dans des moyens de réception 5 de ce dernier, lesquels sont solidaires du bord transversal avant 2b du châssis 2.

L'axe de pivotement 4 est soudé en chevauchement sur deux portions longitudinales parallèles 3d qui prolongent vers l'arrière et à angle droit la base transversale 3a du timon 3, selon un rétrécissement en forme de col. On voit à la figure 2 que ces portions longitudinales 3d sont toutes deux recourbées vers le haut (sensiblement à angle droit dans cet exemple de réalisation) et sont reliées entre elles par une patte filaire transversale 6 de largeur réduite formant l'extrémité arrière du timon 3 et parallèle à l'axe de pivotement 4.

Cette patte 6 présente une fine rainure 6a conçue pour y accrocher un ressort hélicoïdal de traction 7 qui est monté solidaire du châssis 2 et qui est prévu pour rappeler le timon 3 monté sur le chariot 1 vers une position redressée (i.e. selon un angle proche de 90° avec l'horizontale), via un crochet 7a équipant l'avant de ce ressort 7 que l'on positionne et immobilise dans cette rainure 6a. Comme illustré aux figures 1 et 2, le ressort 7 est relié de manière fixe via son crochet arrière 7b à un organe d'accrochage formé d'une tige coudée 2c sensiblement en forme de « S » faisant saillie sous le châssis 2, de telle manière que l'axe de symétrie du ressort 7 soit perpendiculaire à la patte d'accrochage 6 et donc à l'axe de pivotement 4.

Plus précisément, on voit à la figure 2 que les portions longitudinales 3d du timon qui aboutissent à la patte d'accrochage 6 sont prévues légèrement coudées vers le haut par rapport au plan contenant les rebords 3b du timon 3 de sorte que, lorsque celui-ci occupe la position redressée illustrée sur cette figure pour le montage/ démontage du ressort 7 vis-à-vis du châssis 2 et de la patte 6, cette dernière se trouve sensiblement à la même hauteur que le coude de la tige 2c recevant le crochet arrière 7b de ce ressort 7.

Quant aux moyens de réception 5 de l'axe de pivotement 4 qui sont notamment visibles à la figure 1, ils comportent deux coudes en forme de U qui s'étendent chacun dans un plan vertical à l'avant du châssis 2 et longitudinal par rapport à ce dernier, en formant chacun deux ailes avant 5a et arrière 5b reliées entre elles par une âme 5c pour recevoir l'axe 4 en formant le joint mobile précité, de manière que les extrémités recourbées 4a, 4b de l'axe 4 chevauchent ces coudes pour le bloquer avec jeu sur le chariot 1. La distance transversale séparant ces deux coudes est donc prévue légèrement inférieure à la longueur de l'axe 4, extrémités 4a, 4b incluses. Comme cela sera expliqué ci-après, le timon 3 peut ainsi pivoter sensiblement autour d'une ligne virtuelle qui joint les âmes 5c respectives de ces coudes.

Comme illustré à la figure 1, les deux ailes avant 5a sont reliées entre elles par une traverse horizontale 8 parallèle au bord avant 2b du châssis 2, et les deux ailes arrière 5b se prolongent respectivement l'une vers l'autre via deux coudes par deux portions transversales 9 parallèles à la traverse 8.

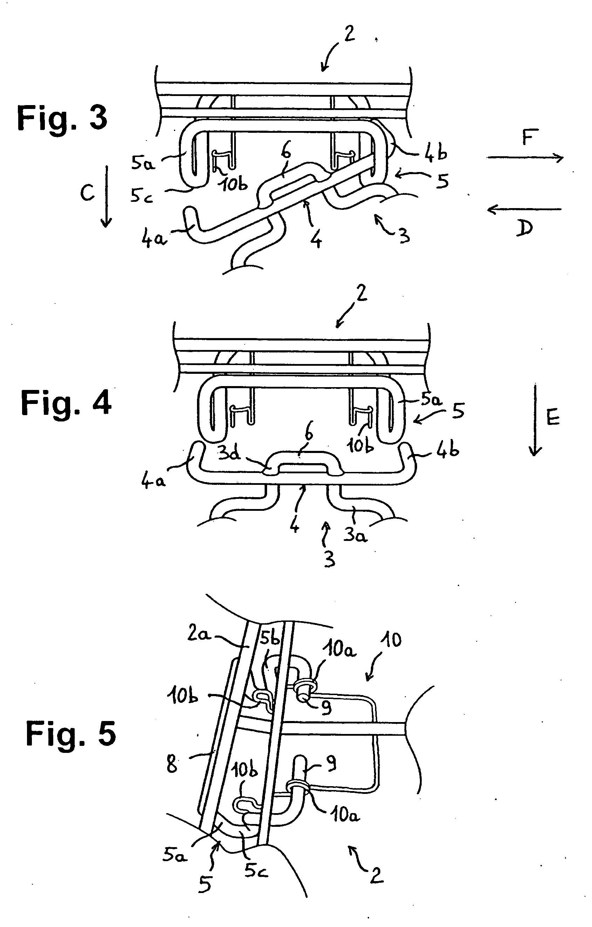

Comme cela est notamment visible à la figure 5, un ressort de torsion 10 conçu pour s'opposer à la rotation de l'axe 4 dans le sens du redressement du timon 3, de sorte à rappeler ce dernier vers le bas pour le maintenir en position abaissée de montage dans les moyens de réception 5, est monté fixe sur le châssis 2 via deux points d'accrochage 10a enserrant respectivement les deux portions transversales 9 et deux crochets de retenue 10b entourant l'axe 4.

Pour démonter le timon 3 selon l'invention du chariot 1, on procède de la manière suivante, en référence aux figures 1, 3, 4 et 6.

Dans une première étape illustrée à la figure 1 et dans laquelle le timon 3 est en position redressée, on commence par décrocher manuellement le ressort de traction 7 de la tige coudée 2c du châssis 2, en tirant sur le crochet arrière 7b dans le sens de la flèche A. Puis on décroche manuellement le crochet avant 7a du ressort 7 de la patte d'accrochage 6, en le délogeant de la rainure 6a.

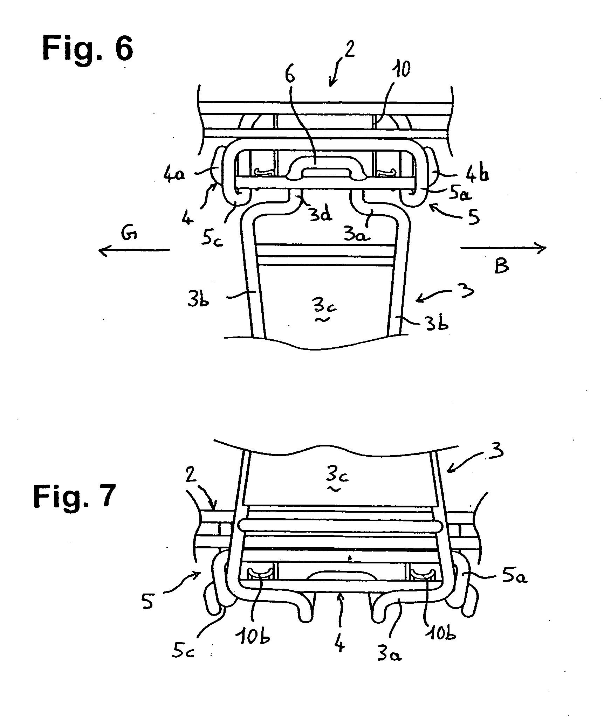

Dans une seconde étape illustrée aux figures 6 puis 3 et dans laquelle on a au préalable abaissé le timon 3 vers le sol, on le déplace d'abord manuellement de gauche à droite (voir flèche B à la figure 6) puis vers l'avant (voir flèche C à la figure 3) pour déloger l'extrémité gauche 4a de l'axe de pivotement 4 hors du coude gauche des moyens de réception 5, de sorte à obtenir la position semi-démontée de la figure 3. On répète ensuite ces opérations pour déloger l'extrémité droite 4b de l'axe 4 hors du coude droit des moyens de réception 5 (i.e. déplacements dans le sens de flèche D à la figure 3 puis de la flèche E à la figure 4), pour finaliser le démontage du timon 3 du chariot 1 tel qu'illustré à la figure 4.

Comme indiqué précédemment, on notera que le ressort de torsion 10 n'est pas manipulé pendant le démontage du timon 3, sa seule fonction étant de rappeler ce dernier en position montée et abaissée à l'état attelé.

Pour remonter le timon 3 selon l'invention sur le chariot 1, on procède à l'inverse de la manière suivante, en référence aux figures 3, 6 et 7.

Dans une première étape illustrée aux figures 3 et 6 et dans laquelle le timon 3 est en position abaissée, on commence par insérer l'extrémité droite 4b de l'axe 4 dans le coude droit des moyens de réception 5 (voir flèche F à la figure 3), puis on continuer à déplacer le timon 3 de gauche à droite (flèche F) pour pourvoir loger ultérieurement l'extrémité gauche 4a de l'axe 4 dans le coude gauche des moyens de réception 5 (cela est réalisé par le déplacement selon la flèche D à la figure 3). On procède ensuite au centrage transversal du timon 3 via un déplacement de droite à gauche (dans le sens de la flèche G à la figure 6).

Dans une seconde étape illustrée aux figures 2 et 7, on relève au préalable le timon 3 pour l'amener dans une position redressée (figure 7), puis on accroche le crochet avant 7a du ressort de traction 7 à la patte 6 du timon 3 via sa rainure 6a. On accroche ensuite le crochet arrière 7b de ce ressort 7 sur la tige coudée 2c du châssis en tirant sur le ressort 7 vers l'arrière (dans le sens de la flèche H à la figure 2).

Le timon 3 est ainsi correctement monté pivotant sur le chariot 1, et l'opérateur peut alors atteler ce dernier à l'arrière d'un chariot tracteur équipé d'un crochet d'attelage coopérant de la manière précitée avec l'orifice d'attelage du timon 3.

## Revendications

1. Timon d'attelage (3) pour chariots de manutention (1), le timon comportant un axe transversal de pivotement (4) destiné à être monté pivotant à l'avant d'un chariot tracté (1) et étant adapté pour coopérer avec un crochet d'attelage monté à l'arrière d'un chariot tracteur, le timon étant pourvu d'un moyen de rappel (7) destiné à être relié audit chariot tracté et prévu pour rappeler le timon vers une position redressée, **caractérisé en ce que** ledit moyen de rappel est relié au timon à l'écart dudit axe, lequel forme un joint mobile avec des moyens de réception (5) dudit axe prévus à l'avant dudit chariot tracté, de telle sorte que le timon soit monté amovible sur lesdits moyens de réception en retirant du timon ledit moyen de rappel puis en délogeant ledit axe desdits moyens de réception.

2. Timon (3) selon la revendication 1, **caractérisé en ce que** ledit axe de pivotement (4) se termine par deux extrémités latérales recourbées (4a et 4b) qui sont respectivement adaptées pour bloquer ledit axe dans lesdits moyens de réception (5).

3. Timon (3) selon la revendication 1 ou 2, **caractérisé en ce que** ledit moyen de rappel (7) est monté sur une patte d'accrochage (6) transversale, laquelle est reliée audit axe de pivotement (4) en lui étant parallèle et forme une extrémité arrière du timon.

4. Timon (3) selon la revendication 3, **caractérisé en ce que** ledit moyen de rappel (7) comporte un ressort hélicoïdal de traction dont l'axe de symétrie est agencé perpendiculairement audit axe de pivotement (4).

5. Timon (3) selon la revendication 3 ou 4, **caractérisé en ce qu'**il présente sensiblement une forme de triangle isocèle délimité par deux rebords longitudinaux (3b) se rejoignant en une extrémité avant du timon et par une base transversale (3a) coudée sensiblement à angle droit en se prolongeant d'une manière rétrécie vers ladite extrémité arrière par deux portions longitudinales (3d) parallèles qui sont reliées entre elles par ladite patte d'accrochage (6), ledit axe de pivotement (4) étant monté sur ces portions, par exemple par soudage, en les chevauchant.

6. Timon (3) selon la revendication 5, **caractérisé en ce qu'**il comporte une plaque de guidage (3c) qui s'étend entre lesdits rebords (3b) du timon en formant un orifice d'attelage avec ladite extrémité avant et qui est destinée à guider par glissement, par un effort de traction exercé par le chariot tracteur, ledit crochet le long du timon en l'amenant jusqu'à un bord dudit orifice d'attelage, en vue d'y loger ledit crochet dans une position d'attelage par désengagement de ladite plaque.

7. Chariot de manutention (1) comportant un châssis (2) duquel sont montés solidaires des moyens de réception (5) de l'axe de pivotement (4) d'un timon d'attelage (3), **caractérisé en ce que** ledit timon est tel que défini à l'une des revendications précédentes.

8. Chariot (1) selon la revendication 7, ledit moyen de rappel (7) étant formé d'un ressort hélicoïdal de traction dont l'axe de symétrie est perpendiculaire audit axe de pivotement (4) et qui est monté sur une patte d'accrochage (6) transversale via un crochet avant (7a), laquelle patte est reliée audit axe de pivotement en lui étant parallèle et forme une extrémité arrière du timon (3), **caractérisé en ce que** ledit ressort de traction (7) est relié via un crochet arrière (7b) dont il est pourvu à une organe d'accrochage (2c) sensiblement vertical faisant saillie sous ledit châssis (2), tel qu'une tige coudée.

9. Chariot (1) selon la revendication 7 ou 8, ledit axe de pivotement (4) se terminant par deux extrémités latérales recourbées (4a et 4b) respectivement adaptées pour bloquer transversalement ledit axe dans lesdits moyens de réception (5), **caractérisé en ce que** lesdits moyens de réception comportent deux coudes en forme de U solidaires dudit châssis (2) qui s'étendent chacun dans un plan vertical à l'avant du chariot et longitudinal par rapport à ce dernier en formant chacun deux ailes (5a, 5b) reliées entre elles par une âme (5c) pour recevoir ledit axe en formant ledit joint mobile, de telle sorte que le timon (3) puisse pivoter sensiblement autour d'une ligne qui joint les âmes respectives desdits coudes, lesdites extrémités recourbées venant chevaucher ces coudes pour bloquer ledit axe dans lesdits moyens de réception.

10. Chariot (1) selon la revendication 9, **caractérisé en ce que** chacun de ces deux coudes comporte une aile avant (5a) définissant l'extrémité avant desdits moyens de réception (5) et une aile arrière (5b) en retrait de ladite aile avant, les deux ailes avant (5a) étant reliées entre elles par une traverse horizontale (8) parallèle au bord avant (2a) dudit châssis (2) et les deux ailes arrière (5b) se prolongeant respectivement l'une vers l'autre via deux coudes par deux portions transversales (9) parallèles à ladite traverse.

11. Chariot (1) selon la revendication 9 ou 10, **caractérisé en ce que** ledit châssis (2) est pourvu d'un ressort auxiliaire (10), tel qu'un ressort de torsion, qui est agencé autour dudit axe (4) et qui est conçu pour s'opposer à la rotation dudit axe dans le sens du redressement du timon (3), de sorte à rappeler ce dernier vers le bas pour le maintenir en position de montage dans lesdits moyens de réception (5).

12. Chariot (1) selon les revendications 10 et 11, **caractérisé en ce que** ledit ressort auxiliaire (10) est monté fixe sur ledit châssis (2) via deux points d'accrochage (10a) qui enserrent respectivement lesdites portions transversales (9) et qui sont reliés entre eux, et via deux crochets de retenue (10b) qui sont adaptés pour entourer ledit axe (4) et qui sont respectivement reliés auxdits points d'accrochage.

13. Procédé de montage d'un timon d'attelage (3) sur un chariot de manutention (1), le timon comportant un axe transversal de pivotement (4) destiné à être monté pivotant à l'avant du chariot et étant adapté pour coopérer avec un crochet d'attelage, le timon étant pourvu d'un moyen de rappel (7) destiné à être relié à ce chariot et prévu pour rappeler le timon vers une position redressée, **caractérisé en ce qu'**il comprend essentiellement les étapes suivantes :
a) on insère successivement une première puis une seconde extrémités latérales recourbées (4a et 4b) dudit axe entre les deux ailes (5a et 5b) et l'âme (5c) d'un premier puis d'un second coudes en U, respectivement, chaque coude étant formé en un côté de l'avant du chariot dans un plan vertical longitudinal par rapport à ce chariot, pour monter ledit axe dans une position où il est reçu de manière amovible par ces deux coudes en formant un joint mobile, puis
b) on monte ledit moyen de rappel, tel qu'un ressort hélicoïdal de traction (7) dont l'axe de symétrie est agencé perpendiculairement audit axe, d'une part, sur une patte d'accrochage transversale (6) du timon qui est reliée audit axe en lui étant parallèle et qui forme une extrémité arrière du timon, et, d'autre part, sur un organe d'accrochage (2c) agencé sous le chariot.

## Claims

1. Coupling drawbar (3) for industrial trucks (1), which drawbar comprises a pivoting transverse pin (4) designed to be mounted so as to pivot on the front of a towed truck (1) and designed to co-operate with a towing hook mounted on the rear of a towing truck, the drawbar being provided with a return means (7) designed to be connected to said towed truck and provided as a means of returning the drawbar to an upright position, **characterised in that** said return means is connected to the drawbar at a distance from said pin, which forms a moving joint in conjunction with receiving means (5) for said pin disposed at the front of said towed truck so that the drawbar is removably mounted on said receiving means by removing said return means from the drawbar and then removing said pin from said receiving means.

2. Drawbar (3) as claimed in claim 1, **characterised in that** said pivoting pin (4) is terminated by two curved lateral ends (4a and 4b) which are respectively designed to block said pin in said receiving means (5).

3. Drawbar (3) as claimed in claim 1 or 2, **characterised in that** said return means (7) is mounted on a transverse hooking bar (6) which is linked to said pivot pin (4), being disposed parallel with it, and forms a rear end of the drawbar.

4. Drawbar (3) as claimed in claim 3, **characterised in that** said return means (7) comprises a helical traction spring, the axis of symmetry of which is disposed perpendicular to said pivot pin (4).

5. Drawbar (3) as claimed in claim 3 or 4, **characterised in that** its shape is essentially that of an isosceles triangle bounded by two longitudinal edges (3b) joined at a front end of the drawbar and by a transverse base (3a) bent essentially at a right angle and extended in a contracting manner towards said rear end by two parallel longitudinal portions (3d) which are joined to one another by said hooking bar (6), said pivot pin (4) being mounted on these portions in an overlapping arrangement, for example by welding.

6. Drawbar (3) as claimed in claim 5, **characterised in that** it has a guide plate (3c) which extends between said edges (3b) of the drawbar forming a coupling orifice with said front end, and which is designed to guide said hook along the drawbar in a sliding action by a traction force expended by the towing truck, moving it as far as an edge of said coupling orifice with a view to locating said hook there in a coupling position by disengaging said plate.

7. Industrial truck (1) comprising a chassis (2), by means of which the receiving means (5) of the pivot pin (4) of a coupling drawbar (3) are integrally mounted, **characterised in that** said drawbar is as defined in one of the preceding claims.

8. Truck (1) as claimed in claim 7, said return means (7) being formed by a helical traction spring, the axis of symmetry of which is disposed perpendicular to said pivot pin (4) and which is mounted on a transverse hooking bar (6) via a front hook (7a), which bar is linked to said pivot pin, being disposed parallel with it, and forms a rear end of the drawbar (3), **characterised in that** said traction spring (7) is connected via a rear hook (7b), with which it is provided to a substantially vertical hooking member (2c) protruding underneath said chassis (2), such as a bent rod.

9. Truck (1) as claimed in claim 7 or 8, said pivot pin (4) being terminated by two curved lateral ends (4a and 4b) respectively, designed to block said pin transversely in said receiving means (5), **characterised in that** said receiving means comprise two U-shaped elbows integral with said chassis (2), which extend in a vertical plane at the front of the truck and longitudinally with respect to the latter, each forming two wings (5a, 5b) joined to one another by a web (5c) for receiving said pin and forming the moving joint so that the drawbar (3) can pivot substantially about a line connecting the respective webs of said elbows, said curved ends overlapping these elbows in order to block said pin in said receiving means.

10. Truck (1) as claimed in claim 9, **characterised in that** each of these two elbows has a front wing (5a) defining the front end of said receiving means (5) and a rear wing (5b) set back from said front wing, the two front wings (5a) being linked to one another by a horizontal cross-piece (8) parallel with the front edge (2a) of said chassis (2) and the two rear wings (5b) respectively extending towards one another via two elbows by means of two transverse portions (9) parallel with said cross-piece.

11. Truck (1) as claimed in claim 9 or 10, **characterised in that** said chassis (2) is provided with an auxiliary spring (10), such as a torsion spring, which is disposed around said pin (4) and which is designed to oppose the rotation of said pin in the direction in which the drawbar (3) is placed in an upright position, so as to return the latter downwards in order to maintain it in the mounted position in said receiving means (5).

12. Truck (1) as claimed in claims 10 and 11, **characterised in that** said auxiliary spring (10) is fixedly mounted on said chassis (2) via two hooking points (10a) which respectively clamp said transverse portions (9) and which are linked to one another, and via two retaining hooks (10b) designed to surround said pin (4) and which are respectively linked to said hooking points.

13. Method of mounting a coupling drawbar (3) on an industrial truck (1), which drawbar comprises a transverse pivoting pin (4) designed to be mounted so that it pivots on the front of the truck and being designed to co-operate with a coupling hook, the drawbar being provided with a return means (7) designed to be connected to this truck and provided as a means of returning the drawbar to an upright position, **characterised in that** it essentially comprises the following steps:
a) a first and then a second curved lateral end (4a and 4b) of said pin are successively inserted between the two wings (5a and 5b) and the web (5c) of a first then a second U-shaped elbow, respectively, each elbow being formed at a side at the front of the truck in a vertical longitudinal plane with respect to this truck, in order to fit said pin in a position in which it is removably received by these two elbows forming a moving joint, after which
b) said return means, such as a helical traction spring (7), the axis of symmetry of which is disposed perpendicular to said pin, is mounted on the one hand on a transverse hooking bar (6) of the drawbar which is connected to said pin, being disposed parallel with it, and which forms a rear end of the drawbar and, on the other hand, on a hooking member (2c) disposed underneath the truck.

## Patentansprüche

1. Kupplungsdeichsel (3) für Beförderungswägen (1), wobei die Deichsel eine transversale Schwenkachse (4) umfasst, welche dazu bestimmt ist, schwenkbar an der Vorderseite eines gezogenen Wagens (1) befestigt zu werden und eingerichtet ist, mit einer Kupplungshalterung, welche an einer Hinterseite eines ziehenden Wagens befestigt ist, zusammenzuwirken, wobei die Deichsel mit einem Rückzugmittel (7) versehen ist, welches bestimmt ist, mit dem gezogenen Wagen verbunden zu werden und welches dazu vorgesehen ist, die Deichsel zu einer aufgerichteten Position zurückzuziehen, **dadurch gekennzeichnet, dass** das Rückzugsmittel mit der Deichsel abseits der Achse verbunden ist, welche eine bewegliche Verbindung mit Empfangsmitteln (5) der Achse bildet, welche an der Vorderseite des gezogenen Wagens vorgesehen sind, in einer Weise, dass die Deichsel abnehmbar an den Empfangsmitteln befestigt wird, indem bei der Deichsel das Rückzugmittel zurückgezogen wird und dann die Achse von den Empfangsmitteln entfernt wird.

2. Deichsel (3) gemäß Anspruch 1, **dadurch gekennzeichnet, dass** die Schwenkachse (4) in zwei gekrümmten lateralen Endstücken (4a und 4b) endet, welche jeweils eingerichtet sind, die Achse in den Empfangsmitteln (5) zu blockieren.

3. Deichsel (3) gemäß Anspruch 1 oder 2, **dadurch gekennzeichnet, dass** das Rückzugsmittel (7) an einer transversalen Ankopplungsklaue (6) angebracht ist, welche mit der Schwenkachse (4) verbunden ist, indem sie zu ihr parallel ist, und welche ein hinteres Endstück der Deichsel bildet.

4. Deichsel (3) gemäß Anspruch 3, **dadurch gekennzeichnet, dass** das Rückzugmittel (7) eine Spiralzugfeder umfasst, deren Symmetrieachse senkrecht zu der Schwenkachse (4) angeordnet ist.

5. Deichsel (3) gemäß Anspruch 3 oder 4, **dadurch gekennzeichnet, dass** sie im Wesentlichen die Form eines gleichschenkligen Dreiecks aufweist, welches durch zwei longitudinale Kanten (3b), welche sich an einem vorderen Ende der Deichsel vereinigen, und durch eine transversale Basis (3a), welche im Wesentlichen unter einem rechten Winkel gekrümmt ist, indem sie sich in einer verjüngten Weise zu dem hinteren Ende durch zwei parallele longitudinale Abschnitte (3d) verlängert, welche miteinander durch die Ankopplungsklaue (6) verbunden sind, wobei die Schwenkachse (4) an diesen Abschnitten angebracht ist, beispielsweise durch Schweißen, indem sie über sie greift, begrenzt ist.

6. Deichsel (3) gemäß Anspruch 5, **dadurch gekennzeichnet, dass** sie eine Führungsplatte (3c) umfasst, welche sich zwischen den Kanten (3b) der Deichsel erstreckt, indem sie mit dem vorderen Ende eine Anhängerkupplungsöffnung bildet und welche dazu bestimmt ist, durch Gleiten durch eine durch den ziehenden Wagen ausgeübte Zugkraft die Halterung entlang der Deichsel zu führen, indem sie bis zu einer Kante der Anhängerkupplungsöffnung geführt wird im Hinblick darauf, die Halterung dort in einer Kupplungsposition durch Abkopplung von der Platte zu beherbergen.

7. Beförderungswagen (1) umfassend einen Rahmen (2), an welchem in verbundener Weise Aufnahmemittel (5) einer Schwenkachse (4) einer Kopplungsdeichsel (3) angebracht sind, **dadurch gekennzeichnet, dass** die Deichsel wie in einem der vorhergehenden Ansprüche definiert ist.

8. Wagen (1) gemäß Anspruch 7, wobei das Rückzugmittel (7) durch eine Zugspiralfeder gebildet ist, deren Symmetrieachse senkrecht zu der Schwenkachse (4) angeordnet ist und welche über eine vordere Halterung (7a) an einer transversalen Kopplungsklaue (6) angebracht ist, wobei die Klaue mit der Schwenkachse verbunden ist, indem sie zu ihr parallel ist und ein hinteres Ende der Deichsel (3) bildet, **dadurch gekennzeichnet, dass** die Zugfeder (7) über eine hintere Halterung (7b) verbunden ist, von dem sie an einem im Wesentlichen senkrechten Kopplungsorgan (2c) vorgesehen ist, welches unter dem Rahmen (2) hervorragt, wie ein gebeugter Schaft.

9. Wagen (1) gemäß Anspruch 7 oder 8, wobei die die Schwenkachse in zwei gekrümmten lateralen Endstücken (4a und 4b) endet, welche jeweils eingerichtet sind, die Achse in den Aufnahmemitteln (5) transversal zu blockieren, **dadurch gekennzeichnet, dass** die Aufnahmemittel zwei U-förmige Bogenstücke umfassen, welche mit dem Rahmen (2) verbunden sind und welche sich jeweils in einer vertikalen Ebene an der Vorderseite des Wagens und longitudinal bezüglich des Letzteren erstrecken, sodass sie jeweils zwei Flügel (5a, 5b) bilden, welche miteinander durch einen Steg (5c) verbunden sind, um die Achse aufzunehmen, wobei sie bewegliche Verbindung derart bilden, dass die Deichsel (3) im Wesentlichen um eine Linie schwenken kann, welche die jeweiligen Stege der Bogenstücke verbindet, wobei die gekrümmten Endstücke die Bogenstücke übergreifen, um die Achse in den Aufnahmemitteln zu blockieren.

10. Wagen (1) gemäß Anspruch 9, **dadurch gekennzeichnet, dass** jedes der zwei Bogenstücke einen vorderen Flügel (5a) umfasst, welche das vordere Endstück der Aufnahmemittel (5) bilden, und einen hinteren Flügel (5b) hinter dem vorderen Flügel, wobei die zwei vorderen Flügel (5a) miteinander durch eine horizontale Traverse (8) parallel zur vorderen Kannte (2a) des Rahmens (2) verbunden sind und die zwei hinteren Flügel (5b) sich jeweils über zwei Bogenstücke durch zwei transversale Abschnitte (9), welche zu der Traverse parallel sind, zueinander hin verlängern.

11. Wagen (1) gemäß Anspruch 9 oder 10, **dadurch gekennzeichnet, dass** der Rahmen (2) mit einer Hilfsfeder (10) versehen ist wie einer Torsionsfeder, welche um die Achse (4) angeordnet ist und welche ausgestaltet ist, sich der Rotation der Achse in Richtung des Aufrichtens der Deichsel (3) in einer Weise entgegenzustellen, die letztere nach unten zu ziehen, um sie bei einer Montage in den Aufnahmemitteln (5) zu halten.

12. Wagen (1) gemäß den Ansprüchen 10 und 11, **dadurch gekennzeichnet, dass** die Hilfsfeder (10) fest an dem Rahmen (2) über zwei Kopplungspunkte (10a) angebracht ist, welche jeweils die transversalen Abschnitte (9) umschließen und welche miteinander verbunden sind, und über zwei Halterungen (10b), welche eingerichtet sind, die Achse (4) einzuschließen und welche jeweils mit den Kopplungspunkten verbunden sind.

13. Montageverfahren einer Kopplungsdeichsel (3) an einem Beförderungswagen (1), wobei die Deichsel eine transversale Schwenkachse (4) umfasst, welche dazu bestimmt ist, schwenkbar an der Vorderseite des Wagens angebracht zu werden und welche eingerichtet ist, mit einer Kopplungshalterung zusammenzuwirken, wobei die Deichsel mit einem Rückzugsmittel (7) versehen ist, welches bestimmt ist, mit dem Wagen verbunden zu werden und welches vorgesehen ist, die Deichsel in eine aufrechte Position zurückzuziehen, **dadurch gekennzeichnet, dass** es im Wesentlichen die folgenden Schritte umfasst:
a) es wird hintereinander ein erstes und dann ein zweites gekrümmtes laterales Endstück (4a und 4b) der Achse zwischen zwei Flügeln (5a und 5b) und dem Steg (5c) eines ersten gefolgt von einem zweiten jeweiligen U-förmigen Bogenstück eingesetzt, wobei jedes Bogenstück auf einer Seite der Vorderseite des Wagens in einer vertikal longitudinalen Ebene bezüglich auf den Wagen ausgebildet ist, um die Achse in einer Position anzubringen, in welcher sie in abnehmbarer Weise durch die zwei Bogenstücke aufgenommen wird, wobei eine bewegliche Verbindung gebildet wird, und dann
b) das Rückholmittel wie eine Spiralzugfeder (7), deren Symmetrieachse senkrecht zu der Achse angeordnet ist, wird auf der einen Seite auf einer transversalen Kopplungsklaue (6) der Deichsel, welche mit der Achse verbunden ist, indem sie zu ihr parallel ist und ein hinteres Endstück der Deichsel bildet, und auf der anderen Seite an einem Kopplungsorgan (2c), welches an dem Wagen angeordnet ist, befestigt wird.
